Europäisches Patentamt

(19) **European Patent Office**

**Office européen des brevets**

(11) Numéro de publication: **0 017 123**
**A1**

(12) # DEMANDE DE BREVET EUROPEEN

(21) Numéro de dépôt: **80101540.5**

(22) Date de dépôt: **24.03.80**

(51) Int. Cl.³: **F 02 M 53/00**

(30) Priorité: **28.03.79 FR 7907994**

(43) Date de publication de la demande:
**15.10.80 Bulletin 80/21**

(84) Etats Contractants Désignés:
**AT BE CH DE GB IT LU NL SE**

(71) Demandeur: **Minoux, Jean-Pierre**

**F-68490 Petit Landau(FR)**

(72) Inventeur: **Minoux, Jean-Pierre**

**F-68490 Petit Landau(FR)**

(74) Mandataire: **Nithardt, Roland**
**12, rue du 17 Novembre**
**F-68100 Mulhouse(FR)**

(54) **Réchauffeur de gaz-oil pour moteurs du type Diesel.**

(57) Réchauffeur de combustible liquide pour moteurs du type Diesel, caractérisé en ce qu'un bac (5), branché sur le circuit d'eau (6,8) est traversé par la conduite (10) contenant le combustible en provenance du réservoir (9) avant son introduction dans le moteur (1), cette conduite étant façonnée en serpentin (11) dans le bac (5).

EP 0 017 123 A1

- 1 -

## RECHAUFFEUR DE GAZ-OIL POUR MOTEURS DU TYPE DIESEL

Il est un fait que les véhicules propulsés par des moteurs du type Diesel ont, lors de la saison froide, des difficultés à démarrer. Dans ces moteurs, les fines gouttelettes du combustible liquide pulvérisé (gaz-oil) sont mises en contact avec l'air fortement comprimé en vue d'un enflammement rapide.

Le démarrage ou lancement avec un démarreur alimenté par une batterie est courant. Il est cependant pénible dans une ambiance froide lorsqu'il se produit un givrage perturbant.

Pour éviter cet inconvénient, l'invention prévoit un réchauffeur du gaz-oil en provenance de son réservoir avant qu'il ne soit introduit dans le moteur. Ce réchauffeur est un bac, branché sur le circuit de l'eau et qui est traversé par le combustible, de préférence en serpentin, de façon à être amené à une température convenable.

Le schéma annexé représente à titre d'exemple non limitatif, une telle installation.

Le moteur est désigné par 1, la pompe à eau par 2, le radiateur de chauffage par 3 et le radiateur à eau de refroidissement par 4.

Le bac 5, où doit avoir lieu le préchauffage du combustible, est relié par la conduite 6 à la culasse 7 du moteur 1 et d'autre part par la conduite 8 au radiateur de chauffage 3.

Le combustible liquide du réservoir 9 est amené suivant la flèche a dans le bac réchauffant 5 par la conduite 10 façonnée en serpentin 11 pour ensuite, à l'état chauffé, traverser le filtre 12, avant d'aboutir à la pompe d'injection 13 où a lieu l'injection dans le moteur par autant de conduites 14 qu'il y a de cylindres.

L'entrée de l'eau dans le bac 5 a lieu par la conduite 6 suivant la flèche b, la sortie, par la conduite 8 suivant la flèche c qui la dirige vers le radiateur de chauffage 3 pour aboutir, suivant la flèche d, à la pompe 2 qui alimente également le radiateur à eau de refroidissement sur lequel sont branchées les conduites 15 et 16.

Pour que le système puisse fonctionner dans de bonnes conditions même lorsque le moteur a séjourné pendant un temps relativement long dans une atmosphère froide et que le liquide du bac 5 est lui-même refroidi, on prévoit une résistance 17 (représentée schématiquement) pouvant être reliée à la batterie par un commutateur approprié. Bien entendu, cette résistance peut être disposée dans le bac de façon que son efficacité soit maximale, de préférence à proximité immédiate, par exemple enroulée autour du serpentin 11.

- 1 -

0017123

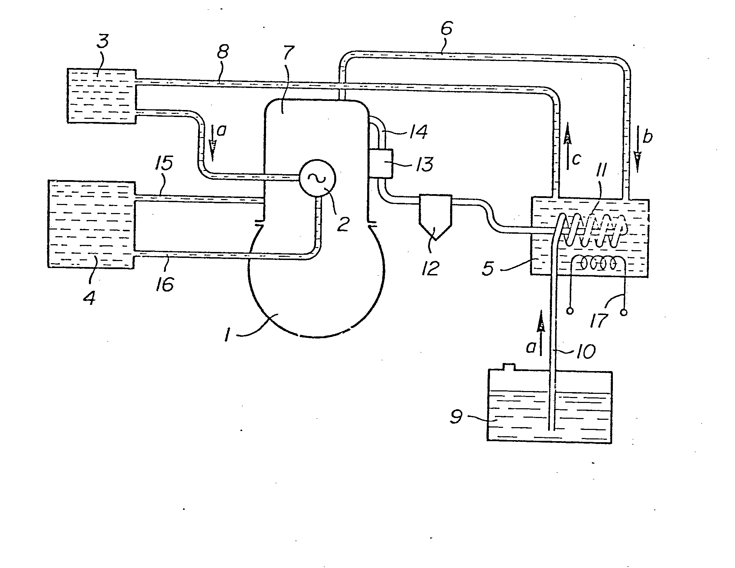

Revendications

1. Réchauffeur de combustible liquide pour moteurs de type Diesel, caractérisé en ce qu'un bac de préchauffage 5, branché sur le circuit d'eau 6, 8, est traversé par la conduite 10 contenant le combustible en provenance du réservoir 9 avant son introduction dans le moteur 1.

2. Réchauffeur selon la revendication 1, caractérisé en ce que la conduite 10 amenant le combustible liquide est façonnée en serpentin 11 à l'intérieur du bac 5.

3. Réchauffeur selon la revendication 1, caractérisé en ce que le bac de préchauffage 5 contient une résistance électrique, pouvant être raccordée au moins momentanément à la batterie.

**Office européen des brevets**

**RAPPORT DE RECHERCHE EUROPEENNE**

Numéro de la demande

EP 80 10 1540.5

| DOCUMENTS CONSIDERES COMME PERTINENTS | | | CLASSEMENT DE LA DEMANDE (Int. Cl.3) |
|---|---|---|---|
| Catégorie | Citation du document avec indication, en cas de besoin, des parties pertinentes | Revendication concernée | |
| X | CH - A - 552 750 (LACREX-BREVETTI S.A.) <br> * colonne 1, lignes 18 à 24, 40 à 52, 56 à 61; colonne 2, lignes 1 à 42 * <br> -- | 1-3 | F 02 M 53/00 |
| | US - A - 3 354 872 (GRATZMULLER) <br> * abrégé; fig., positions 1,3,4,15,16, 18,21,26,32 * <br> -- | 1-3 | |
| | DE - C - 705 788 (O. WOLFF) <br> * lignes 39 à 49; fig., positions a à d * <br> -- | 3 | DOMAINES TECHNIQUES RECHERCHES (Int. Cl.3) |
| A | DE - C - 616 295 (MASCHINENFABRIK AUGS-BURG-NÜRNBERG) <br> * lignes 11 à 18 * <br> -- | | F 02 M 53/00 |
| A | DE - C - 483 613 (LINKE-HOFMANN-BUSCH-WERKE) <br> * page 1, lignes 28 à 68, page 2, lignes 1 à 31 * <br> -- | | |
| A | DE - C - 275 925 (NEUMANN) <br> * page 1, lignes 9 à 22, 36 à 45, 53 à 61 * <br> ---- | | CATEGORIE DES DOCUMENTS CITES |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| Berlin | 20-06-1980 | STÖCKLE |

OEB Form 1503.1 06.78